(19) Europäisches Patentamt / European Patent Office / Office européen des brevets

(11) **EP 4 597 025 A1**

(12) **EUROPEAN PATENT APPLICATION**
published in accordance with Art. 153(4) EPC

(43) Date of publication:
**06.08.2025 Bulletin 2025/32**

(21) Application number: **23871579.1**

(22) Date of filing: **22.08.2023**

(51) International Patent Classification (IPC):
*G01B 11/14* ^(2006.01)

(52) Cooperative Patent Classification (CPC):
**G01B 11/00; G01B 11/14**

(86) International application number:
**PCT/JP2023/030195**

(87) International publication number:
**WO 2024/070338 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.09.2022 JP 2022156495**

(71) Applicant: **OMRON Corporation
Kyoto 600-8530 (JP)**

(72) Inventor: **NARUSE, Yosuke
Kyoto-shi, Kyoto 600-8530 (JP)**

(74) Representative: **Appelt, Christian W.
Boehmert & Boehmert
Anwaltspartnerschaft mbB
Pettenkoferstrasse 22
80336 München (DE)**

(54) **POSITION MEASURING SYSTEM, AND ILLUMINATION CONDITION OPTIMIZING SYSTEM**

(57) A position measuring system for measuring, for a workpiece and a shape element having a cubic shape and provided on the workpiece, a relative position of the shape element with respect to the workpiece. The position measuring system includes: an imaging device configured to image the workpiece; an illumination device that can be used as a light source for the imaging device to image the workpiece and change an illumination condition for the workpiece; an image processing unit configured to obtain the relative position by using the image of the workpiece; an illumination condition specifying unit configured to specify a preferred illumination condition of the illumination device under which a fluctuation in the relative position caused by a fluctuation in a positional relationship between the imaging device and the workpiece in imaging the workpiece and obtained by the image processing unit is reduced; and a measurement control unit configured to cause the imaging device to image the workpiece under the preferred illumination condition and cause the image processing unit to obtain the relative position by using the image of the workpiece imaged.

[FIG. 6]

EP 4 597 025 A1

**Description**

**CROSS REFERENCE TO RELATED APPLICATIONS**

This application claims the benefit of priority to Japanese Patent Application No. 2022-156495 filed on September 29, 2022. The entire contents of the above-identified application are hereby incorporate by reference.

**TECHNICAL FIELD**

The present invention relates to a position measuring system and a preferred illumination condition acquiring system.

**BACKGROUND**

To ensure positional accuracy between an LED element and a lens that receives light emitted from an LED in mounting the LED element on a substrate, the LED element needs to be mounted at a correct position on the substrate. For this reason, the LED mounting position is inspected.
Patent Document 1 describes optically recognizing a carrier holding a substrate with an LED element mounted to detect the position of a representative mark formed on the carrier and a mounting position where an LED element is mounted on the substrate in the carrier and obtain a relative position of the mounting position with respect to the representative mark.

**CITATION LIST**

**PATENT LITERATURE**

Patent Document 1: JP 2014-179186 A

**SUMMARY**

**TECHNICAL PROBLEM**

However, a rounded cubic object, such as an LED element, changes when the direction of light emitted to the cubic object fluctuates for imaging, the state of shading on the surface of the cubic object and may thus causes the measured value of the position to fluctuate. In a situation of imaging the substrate while transporting the substrate by a conveyor, a variation in the positional relationship between the imaging device, the illumination device, and the substrate during imaging occurs, the direction of light emitted to the cubic object on the substrate fluctuates, and thus the measured value of the position may fluctuate.
It is assumed that the method of the related art described in Patent Document 1 causes no variation in the positional relationship between the imaging device, the illumination device, and the substrate during imaging, and thus a fluctuation occurring in the measured value is not recognized.
The present invention aims to allow, in measuring a relative position of a cubic shape element, such as an LED element, provided on a workpiece, such as a substrate, with respect to the workpiece, fluctuations in measured values of the relative position of the form element with respect to the workpiece to be reduced even when the positional relationship between the imaging device and the workpiece fluctuates.

**SOLUTION TO PROBLEM**

A position measuring system according to an embodiment of the present invention is a position measuring system for measuring, for a workpiece and a shape element having a cubic shape and provided on the workpiece, a relative position of the shape element with respect to the workpiece. The position measuring system includes: an imaging device configured to image the workpiece; an illumination device that can be used as a light source for the imaging device to image the workpiece and change an illumination condition for the workpiece; an image processing unit configured to obtain the relative position by using an image of the workpiece; an illumination condition specifying unit configured to specify a preferred illumination condition of the illumination device under which a fluctuation in the relative position caused by a fluctuation in a positional relationship between the imaging device and the workpiece in imaging the image of the workpiece and obtained by the image processing unit is reduced; and a measurement control unit configured to cause the imaging device to image the workpiece under the preferred illumination condition and cause the image processing unit to obtain the relative position by using the image of the workpiece imaged.

The above-described configuration can reduce, in measuring a relative position of a shape element having a cubic shape and provided on a workpiece with respect to the workpiece, a fluctuation in the measured value of the relative position of the form element with respect to the workpiece even when the positional relationship between the imaging device and the workpiece fluctuates.

The shape element may be a one-dimensional shape element, and the image processing unit may obtain the relative position by using an intersection of a search line and the one-dimensional shape element as a position of the shape element.

The shape element may be a two-dimensional shape element, and the image processing unit may obtain the relative position by using a representative position of the two-dimensional shape element specified within a search area as a position of the shape element.

The shape element may include a plurality of one-dimensional shape elements, and the image processing unit may obtain a position of an intersection of one search line of a plurality of search lines and one shape element of the plurality of one-dimensional shape elements for a plurality of pairs of the one search line and the one shape element and obtain the relative position by using representative positions obtained based on a plurality of the positions of intersections obtained as positions of the plurality of one-dimensional shape elements.

The preferred illumination condition specified by the illumination condition specifying unit can be an illumination condition under which, when images to be used for specifying the preferred illumination condition are images of a plurality of workpieces and include a plurality of images in which the positional relationship between the imaging device and the workpieces differs for one of the workpieces and a value regarded as a true value of the relative position is further available for each of the workpieces, a sum of fluctuations in the relative position for the plurality of workpieces from the value regarded as the true value for each of the workpieces is reduced.

The preferred illumination condition specified by the illumination condition specifying unit can be an illumination condition under which, when images to be used for specifying the preferred illumination condition are images of a plurality of workpieces and include a plurality of images in which the positional relationship between the imaging device and the workpieces differs for one of the workpieces, a sum of fluctuations in the relative position for each of the workpieces for the plurality of workpieces is reduced.

The illumination condition specifying unit may specify, when the workpiece includes a plurality of the shape elements having a cubic shape, the preferred illumination condition for each of the shape elements having a cubic shape, and the image processing unit may obtain the relative position by using the image of the workpiece imaged under the preferred illumination condition corresponding to the shape element having a cubic shape to be processed for each of the plurality of the shape elements having a cubic shape and provided on the workpiece.

Furthermore, a virtual image generation unit configured to generate, based on an image of the workpiece imaged under a plurality of illumination conditions, a virtual image of the workpiece to be obtained when imaged under an illumination condition different from the illumination condition used for imaging may be provided, the image processing unit may obtain the relative position even when the image of the workpiece is the virtual image, and the illumination condition specifying unit may specify the preferred illumination condition under which a fluctuation in the relative position obtained for the virtual image or for the image of the workpiece imaged and the virtual image is reduced.

Furthermore, a determination unit configured to obtain a deviation amount of the relative position obtained by the image processing unit from a reference position and determine whether the relative position is favorable or unfavorable based on the deviation amount may be provided.

A preferred illumination condition acquiring system according to an embodiment of the present invention is a preferred illumination condition acquiring system for acquiring, for a workpiece and a shape element having a cubic shape and provided on the workpiece, a preferred illumination condition for illumination during imaging to measure a relative position of the shape element with respect to the workpiece. The preferred illumination condition acquiring system includes: an imaging device configured to image the workpiece; an illumination device that can be used as a light source for the imaging device to image the workpiece and change the illumination condition for the workpiece; an image processing unit configured to obtain the relative position by using an image of the workpiece; and an illumination condition specifying unit configured to specify a preferred illumination condition of the illumination device under which a fluctuation in the relative position caused by a fluctuation in a positional relationship between the imaging device and the workpiece in imaging the image of the workpiece and obtained by the image processing unit is reduced.

The above-described configuration can provide an illumination condition under which, in measuring a relative position of a cubic shape element provided on a workpiece with respect to the workpiece, a fluctuation in the measured value of the relative position of the form element with respect to the workpiece can be reduced even when the positional relationship between the imaging device and the workpiece fluctuates.

A position measuring system according to an embodiment of the present invention is a position measuring system for measuring, for a workpiece and a shape element having a cubic shape and provided on the workpiece, a relative position of the shape element with respect to the workpiece. The position measuring system includes: an imaging device configured to image the workpiece;

an illumination device that can be used as a light source for the imaging device to image the workpiece and change an illumination condition for the workpiece; an image processing unit configured to obtain the relative position by using an image of the workpiece; an illumination condition specifying unit configured to acquire a preferred illumination condition of the illumination device pre-specified under which a fluctuation in the relative position caused by a fluctuation in a positional relationship between the imaging device and the workpiece in imaging the image of the workpiece and obtained by the image processing unit is reduced; and a measurement control unit configured to cause the imaging device to image the workpiece under the preferred illumination condition and cause the image processing unit to obtain the relative position by using the image of the workpiece imaged.

The above-described configuration can reduce, in measuring a relative position of a shape element having a cubic shape and provided on a workpiece with respect to the workpiece, a fluctuation in the measured value of the relative position of the form element with respect to the workpiece by using the specified preferred illumination condition even when the positional relationship between the imaging device and the workpiece fluctuates.

## ADVANTAGEOUS EFFECTS OF INVENTION

The present invention allows, in measuring a relative position of a shape element having a cubic shape and provided on a workpiece with respect to the workpiece, a fluctuation in the measured value of the relative position of the form element with respect to the workpiece to be reduced even when the positional relationship between the imaging device and the workpiece fluctuates.

## BRIEF DESCRIPTION OF THE DRAWINGS

FIG. 1 is a diagram schematically illustrating an example of a position measuring system 1 according to an embodiment of the present invention.
FIG. 2 is a schematic diagram of an illumination device LS integrated with a camera 102 according to the embodiment of the present invention.
FIG. 3 is a diagram illustrating an XZ cross-section of the illumination device LS according to the embodiment of the present invention.
FIG. 4 is a bottom view of the illumination device LS according to the embodiment of the present invention.
FIG. 5 is a diagram schematically illustrating a hardware configuration of a control device included in the position measuring system 1 according to the embodiment of the present invention.
FIG. 6 is a diagram schematically illustrating an example of a functional configuration of the position measuring system 1 according to the embodiment of the present invention.
FIG. 7 is a diagram illustrating operation stages of the position measuring system 1 according to the embodiment of the present invention.
FIG. 8 is a diagram illustrating a substrate on which a component to be measured is mounted in the embodiment of the present invention.
FIG. 9 is a diagram for explaining a fluctuation in shade areas occurring in components according to the embodiment of the present invention.
FIG. 10 is a diagram for explaining position measurement of a one-dimensional marker according to the embodiment of the present invention.
FIG. 11 is a diagram for explaining position measurement of a two-dimensional marker according to the embodiment of the present invention.
FIG. 12 is a diagram for explaining measurement of a position determined from a plurality of one-dimensional markers according to the embodiment of the present invention.
FIG. 13 is a diagram illustrating examples of basal light emission patterns according to the embodiment of the present invention.

## DESCRIPTION OF EMBODIMENTS

An embodiment according to one aspect of the present invention (hereinafter, also referred to as "the present embodiment") will be described below based on the drawings. However, the embodiment described below is merely an example of the present invention in all respects. It goes without saying that various modifications and variations can be made without departing from the scope of the present invention. In other words, a specific configuration according to the embodiment may be adopted as appropriate in implementing the present invention.

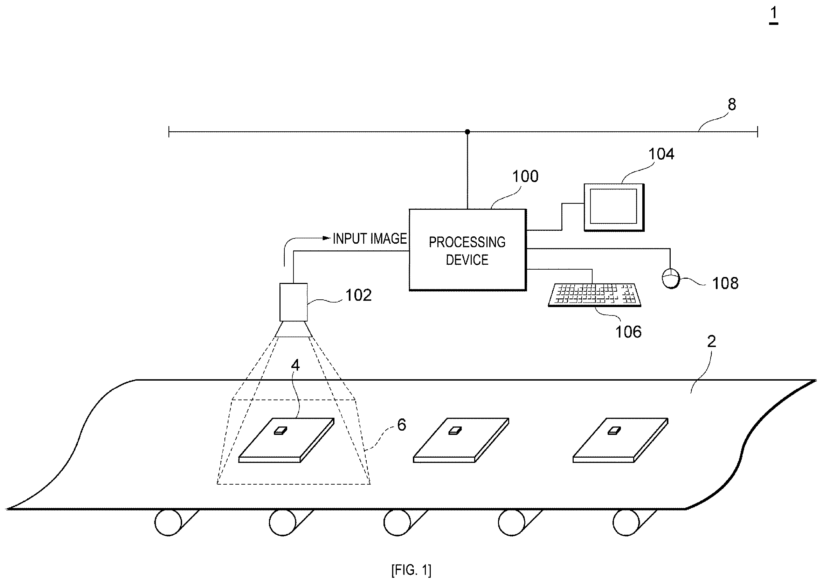

FIG. 1 is a diagram schematically illustrating an example of a position measuring system 1 according to the present invention.

The position measuring system 1 performs image processing on an input image obtained by imaging a workpiece 4, which is a measurement target conveyed on a belt conveyor 2, thereby measuring a relative position of a cubic shape element provided on the workpiece 4 with respect to the workpiece. The workpiece 4 is, for example, a substrate on which an LED element is mounted. The LED element is an example of the cubic shape element provided on the workpiece 4.

A camera 102 as an imaging device integrated with an illumination device LS is disposed above the belt conveyor 2, and an imaging field of view 6 of the camera 102 is configured to include a predetermined region of the belt conveyor 2. Here, as the illumination device LS, for example, a multi-channel illumination device such as multi-direction multi-color (MDMC) illumination device, and more specifically, an illumination device described in, for example, Japanese Patent Application No. 2018-031747 by the present applicant can be exemplified.

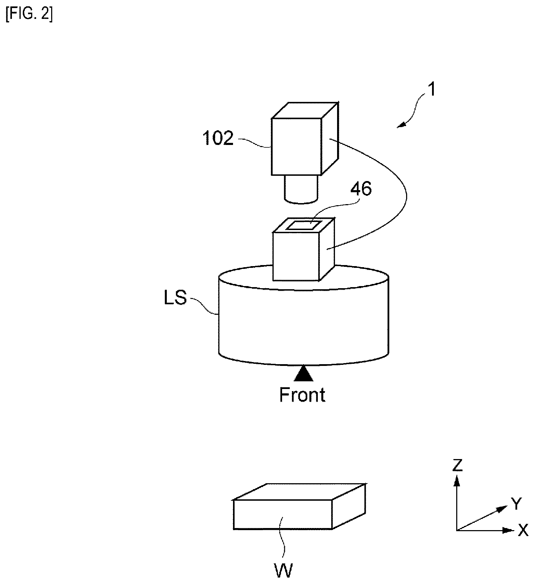

FIG. 2 is a schematic diagram of the illumination device LS integrated with the camera 102. As illustrated in FIG. 2, a direction in which light is emitted from the illumination device LS is Z axis, a horizontal direction on the paper is X axis, and the axis perpendicular to the X axis and the Z axis is Y axis. The direction in which light is emitted is defined as downward, the right side of the line facing the illumination device LS from the position indicated by "Front" in FIG. 2 is defined as right, the left side thereof is defined as left, the front side is defined as front, and the depth side is defined as rear. The illumination device LS is controlled by a processing device 10 via the camera 102. An opening 46 is provided above the illumination device LS so that the camera 102 can image an object W from above the illumination device LS.

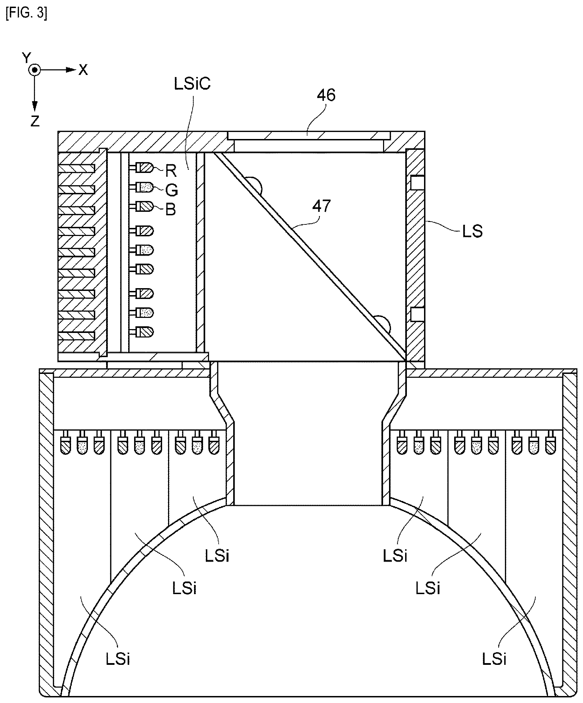

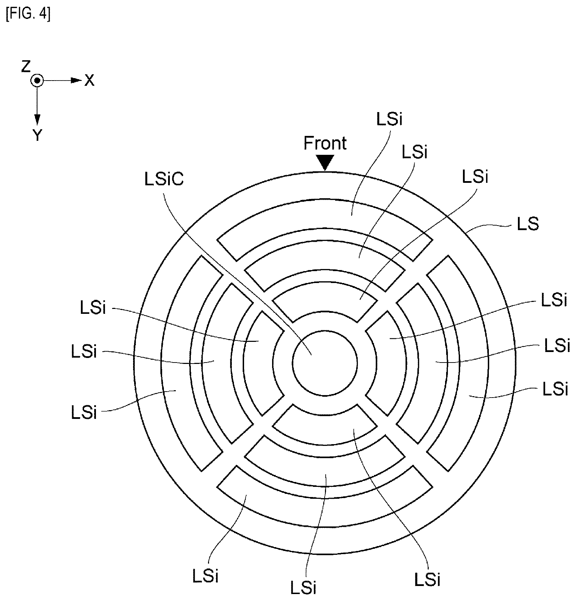

IFIG. 3 is a diagram illustrating an XZ cross-section of the illumination device LS (XZ cross-section viewed from the position indicated by "Front" in FIG. 2), and FIG. 4 is a bottom view of the illumination device LS. As illustrated in FIGS. 3 and 4, the illumination device LS as a multi-channel illumination device includes a plurality of channel illumination units LSi. More specifically, as illustrated in FIG. 4, the illumination device LS has one channel illumination unit LSiC forming a circular shape at the center in a plan view, and twelve channel illumination units LSi forming a fan shape arranged concentrically around the channel illumination section LSiC. Light emitted from the channel illumination unit LSiC at the center hits a reflection plate 47 and is reflected to face downward as illustrated in FIG. 3. In this case, the illumination device LS includes a sum of 13 channel illumination units LSi, and when each channel illumination unit LSi emits light in three colors, the number of monochromatic and single-channel default illumination light emission patterns is $13 \times 3 = 39$ patterns. Furthermore, data of an image generated through imaging of the camera 102 is transmitted to a processing device 100. Imaging by the camera 102 is performed at regular intervals or in response to events.

The illumination device LS may be a movable illumination device other than a multi-channel illumination device. The movable illumination device is an illumination device in which the illumination unit is separated from the camera 102 and of which illuminating direction with respect to the workpiece 4 can be changed by mechanically moving the position of the illumination unit. An illuminating direction when a movable illumination device is used is also an example of an illumination condition.

The illumination condition is, for example, (1) a spatial distribution of light emission intensity and/or light emission color within the illumination device, or (2) a light emission position determined by a position of the illumination device in a movable illumination device. The illumination condition may be a combination of the conditions (1) and (2).

The processing device 100 outputs an illumination command value to the illumination device LS and causes the illumination device LS to emit light in a light emission pattern corresponding to the illumination command value.

The processing device 100 instructs the camera 102 to perform imaging and receives inputs of imaged images. The timing to instruct the camera to perform imaging may be a timing at which a sensor, which is not illustrated, detects that the workpiece 4 has reached a suitable position for imaging. The processing device 100 may not have to give an instruction of the timing to perform imaging, images imaged by the camera 102 at regular time intervals may be sequentially input to the processing device 100, and the processing device 100 may select an image to be used from among input images.

The processing device 100 may be connected to a display 104 as an output unit for displaying a state during processing, a measurement result, and the like, and, for example, a keyboard 106 and a mouse 108 as input units for receiving operations from the user. The processing device 100 is connected to a network 8 and can communicate with other devices via the network 8.

(1. Hardware Configuration)

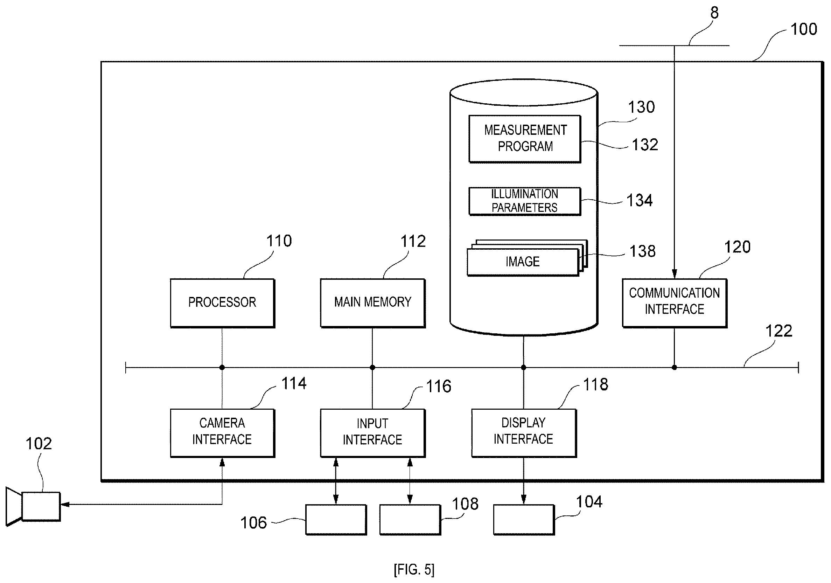

Next, an example of a hardware configuration of the processing device 100 included in the position measuring system 1 according to an embodiment of the present disclosure will be described with reference to FIG. 5. FIG. 5 is a diagram schematically illustrating a hardware configuration of the processing device 100.

As an example, the processing device 100 may be implemented using a general-purpose computer configured according to general-purpose computer architecture. The processing device 100 includes a processor 110, a main memory 112, a camera interface 114, an input interface 116, a display interface 118, a communication interface 120, and a storage 130. These components are typically communicatively connected to each other via an internal bus 122.

The processor 110 loads various programs stored in the storage 130 into the main memory 112 and executes the programs to implement functions and processing as will be described below. The main memory 112 is configured by a volatile memory and functions as a work memory necessary for the processor 110 to execute the programs.

The camera interface 114 is connected to the camera 102 and acquires images 138 imaged by the camera 102. The camera interface 114 may instruct the camera 102 on an imaging timing or the like.

The input interface 116 is connected to an input unit such as the keyboard 106 and the mouse 108 and acquires a command indicating an operation or the like to be performed on the input unit from the user.

The display interface 118 outputs various processing results generated from execution of a program by the processor 110 to the display 104.

The communication interface 120 is responsible for processing for communication with other devices via the network 8.

The storage 130 stores programs for causing a computer to function as the processing device 100, such as an operating system (OS) and a measurement program 132. The storage 130 may further store an illumination parameter 134 and a plurality of images 138. The illumination parameter 134 is a parameter representing an illumination condition. An illumination command value is generated based on the illumination parameter 134.

The measurement program 132 stored in the storage 130 may be installed in the processing device 100 via an optical recording medium such as a digital versatile disc (DVD) or a semiconductor recording medium such as a universal serial bus (USB) memory. Alternatively, the measurement program 132 may be downloaded from a server device or the like on the network.

When the processing device 100 is implemented by using a general-purpose computer as described above, some of the functions according to the present embodiment may be implemented by invoking and processing necessary software modules among software modules provided by the OS in a predetermined order and/or at a predetermined timing. **In** other words, the measurement program 132 according to the present embodiment may not include all the software modules for implementing the functions according to the present embodiment and may cooperate with the OS to provide necessary functions.

The measurement program 132 may be provided by being incorporated into a part of another program. In that case, the measurement program 132 itself does not include the module included in the other program to be combined as described above and performs processing in cooperation with the other program. As described above, the measurement program 132 according to the present embodiment may be incorporated in another program.

Although FIG. 5 illustrates an example of the processing device 100 implemented using a general-purpose computer, without limitation, all or some of the functions may be implemented by using a dedicated circuit (for example, an application specific integrated circuit (ASIC), a field-programmable gate array (FPGA), or the like). Furthermore, an external device connected to the network may be set to be responsible for some processing.

(2. Functional Configuration)

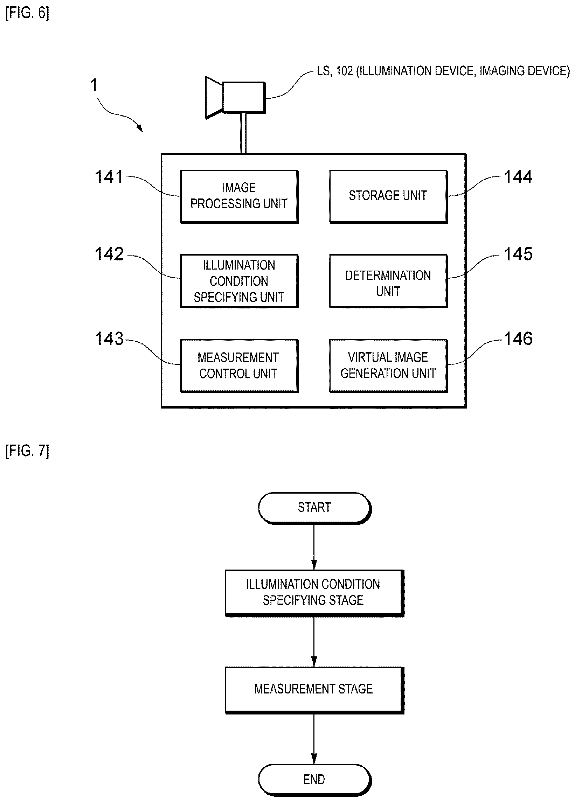

Next, an example of a functional configuration of the position measuring system 1 according to the embodiment of the present disclosure will be described with reference to FIG. 6. FIG. 6 is a diagram schematically illustrating an example of a functional configuration of the position measuring system 1 according to the embodiment of the present disclosure. The processing device 100 of the position measuring system 1 can include an image processing unit 141, an illumination condition specifying unit 142, a measurement control unit 143, a storage unit 144, a determination unit 145, and a virtual image generation unit 146.

The image processing unit 141, the illumination condition specifying unit 142, the measurement control unit 143, the determination unit 145, and the virtual image generation unit 146 in the processing device 100 are implemented by the processor 110 executing the measurement program 132. The processor 110 is a general-purpose processor. All or some of the functions of the processor 110 may be implemented by using a dedicated circuit (for example, an application specific integrated circuit (ASIC), a field-programmable gate array (FPGA), or the like). Furthermore, an external device connected to the network may be set to be responsible for some processing.

The image processing unit 141 uses an image of the workpiece 4 to obtain a relative position of a cubic shape element provided on the workpiece 4 with respect to the workpiece 4.

The illumination condition specifying unit 142 specifies a preferred illumination condition of the illumination device LS, the preferred illumination condition under which a fluctuation in the relative position caused by a fluctuation in the positional relationship between the camera 102 and the workpiece 4 in imaging the image of the workpiece 4 and obtained by the image processing unit 141 is reduced.

The measurement control unit 143 causes the camera 102 to image the workpiece 4 under the preferred illumination condition, and causes the image processing unit 141 to obtain a relative position of a cubic shape element provided on the workpiece 4 with respect to the workpiece using the image of the workpiece 4 imaged.

The storage unit 144 stores an image processed by the image processing unit 141. The storage unit 144 stores an illumination parameter representing the preferred illumination condition specified by the illumination condition specifying unit 142. The storage unit 144 is implemented by the above-described storage 130 that stores a program or data necessary for the operation of the position measuring system 1. The processing device 100 may not include the storage unit 144 and may use a storage of an outside (device) instead of the storage unit 144.

The determination unit 145 obtains a deviation amount of the relative position obtained by the image processing unit 141 from a reference position and determines whether the relative position is favorable or unfavorable based on the deviation amount. Although the position measuring system 1 obtains the relative position, the position measuring system may not include the determination unit 145 if the relative position is not determined to be favorable or unfavorable.

The virtual image generation unit 146 generates a virtual image of the workpiece to be obtained when an image of the workpiece is imaged under an illumination condition different from a plurality of the illumination conditions used in imaging, based on images of the workpiece imaged under the illumination conditions. The virtual image can be used to acquire the preferred illumination condition. The position measuring system 1 may not include the virtual image generation unit 146 when the preferred illumination condition is acquired based only on the actually imaged image of the workpiece.

The position measuring system 1 can also be used as a preferred illumination condition acquiring system configured to specify a preferred illumination condition. In this case, the measurement control unit 143 may not be included.

The position measuring system 1 can be used as a position measuring system that performs measurement under a preferred illumination condition acquired from the outside by partially changing the configuration. In this case, instead of the illumination condition specifying unit 142, provided is an illumination condition specifying unit that acquires a pre-specified preferred illumination condition of the illumination device LS in which a fluctuation in the relative position caused by a fluctuation in the positional relationship between the camera 102 and the workpiece 4 in imaging the image of the workpiece4 and obtained by the image processing unit 141 is reduced.

(3. Operation Example)

In the following description of the operation example, the meanings of the symbols used in the expressions are as shown in Tables 1 to 3. Bold lower cases denote vectors and bold upper cases denote matrices (denoted by non-bold in the text). The other symbols are scalars. "∥∥" represents the L2 norm for vectors.

[Table 1]

| Meaning | Symbol |
|---|---|
| Number of images of workpiece used to acquire preferred illumination condition | M |
| Number of markers | P |
| Marker detection region | $E^{(p)}$ ($1 \leq p \leq P$) |
| Marker likelihood function | $L(r \mid g, \theta^{(p)})$ ※ $g$ denotes an image |
| Marker detection parameter | $\theta^{(p)}$ |
| Marker coordinates | $r$ |

[Table 2]

| (When multi-channel illumination is used) | |
|---|---|
| Meaning | Symbol |
| Number of illumination channels | K |
| Number of basal light emission patterns used for imaging for virtual image generation | N |
| Basal light emission pattern to be used in imaging for virtual image generation | $h_k$ ($1 \leq k \leq K$) $H$ (arranged horizontally) |
| Image of the workpiece imaged under the light emission pattern $h_i$ | $f_{i,m}$ ($1 \leq i \leq N$, $1 \leq m \leq M$) $f'_m$ (arranged vertically for the basal light emission pattern) |

(continued)

| (When multi-channel illumination is used) | |
|---|---|
| Meaning | Symbol |
| Image synthesis weight | $w_i$ $(1 \le i \le N)$<br>$w$ (aligned with a vertical vector) |
| Light emission intensity for each illumination CH | $u_k$ $(1 \le k \le K)$<br>$u$ (aligned with a vertical vector) |

[Table 3]

| (When movable illumination is used) | |
|---|---|
| Meaning | Symbol |
| Number of positioning positions of the illumination device | $Z$ |
| Image of number m imaged at position z | $g_{z,m}$ $(1 \le z \le Z, 1 \le m \le M)$ |
| Position number to be finally obtained | $z$ |

(Illumination Condition Specifying Stage and Measurement Stage)

FIG. 7 is a flowchart showing operation stages of the position measuring system 1. As shown in FIG. 7, the operation of the position measuring system 1 is divided into an illumination condition specifying stage and a measurement stage.

In the illumination condition specifying stage, the position measuring system 1 operates as follows.

The image processing unit 141 obtains a relative position of a cubic shape element provided on the workpiece 4 with respect to the workpiece 4 in each image of the workpiece 4 imaged under a plurality of illumination conditions.

The illumination condition specifying unit 142 specifies a preferred illumination condition of the illumination device LS, the preferred illumination condition under which a fluctuation in the relative position caused by a fluctuation in the positional relationship between the camera 102 and the workpiece 4 in imaging the image of the workpiece 4 and obtained by the image processing unit 141 is reduced.

The setting of the illumination condition with respect to the illumination device LS and control of the imaging with respect to the camera 102 in the illumination condition specifying stage may be manually operated or may be automatically operated programmed in the processing device 100.

In the measurement stage, the position measuring system 1 operates as follows.

The measurement control unit 143 causes the camera 102 to image the workpiece 4 under the preferred illumination condition and causes the image processing unit 141 to obtain a relative position of a cubic shape element provided on the workpiece 4 with respect to the workpiece by using the image of the workpiece 4 imaged.

When determining whether the relative position is favorable or unfavorable, the determination unit 145 obtains a deviation amount of the relative position obtained by the image processing unit from the reference position and determines whether the relative position is favorable or unfavorable based on the deviation amount. Here, the reference position may be a reference position in terms of design or a statistical value (for example, mean) of a plurality of measured relative positions.

(Fluctuation Factor of Measured Value of Position)

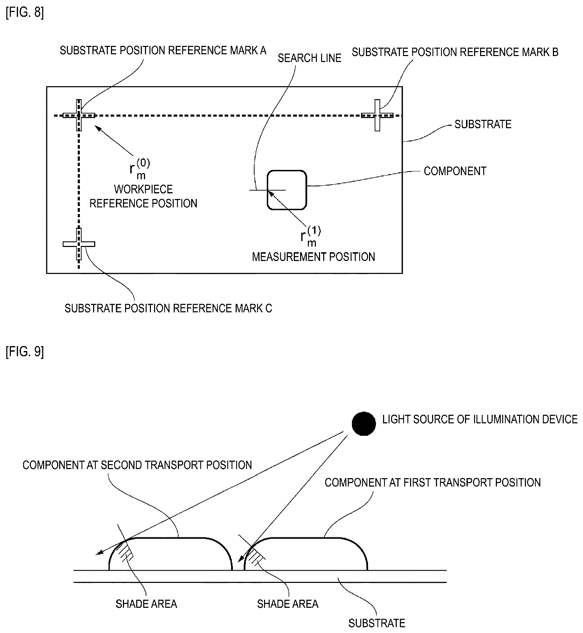

FIG. 8 is a diagram illustrating a substrate on which a component is mounted. The component is an example of a cubic shape element, and the substrate is an example of the workpiece 4. Substrate position reference marks A, B and C are printed on the substrate. The substrate position reference mark A indicates the origin $r_m^{(0)}$ of the substrate coordinate system. The direction connecting the substrate position reference marks A and B is the X direction in the substrate coordinate system. The direction connecting the substrate position reference marks A and C is the Y direction in the substrate coordinate system. On an imaged image, the intersection between the left side of the component and the search line set by the position measuring system 1 is set as a measurement position $r_m^{(1)}$.

FIG. 9 is a diagram for describing a fluctuation in shade areas occurring in components. FIG. 9 is a view of a portion of the component of FIG. 8 viewed from the Y direction of the substrate. Due to variations in the transport position of the substrate at the time of imaging, the position of the component at the time of first imaging is the position of the component illustrated as the component at a first transport position, and the position of the component at the time of second imaging is the position of the component illustrated as the component at a second transport position. The variations in the transport position causes the direction of a light beam hitting the left rounded corner of the component to change as illustrated. Accordingly, the position of the boundary between the area hit by the light and the shade area hit by no light is also changed. The position of the boundary of the shade area is recognized as an edge representing the left side of the component on images. Therefore, the measured value of the edge position fluctuates due to the variation in the transport position. In this case, it is expected that the fluctuation of the measured value will be reduced if light is emitted from the left-top direction in FIG. 9 to the left side of the component to be measured so that no shadow is formed on the part to be measured. Such a fluctuation in the measured value of the edge position caused by a fluctuation in the positional relationship between the illumination device LS and the camera 102 and the substrate occurs not only due to a fluctuation in the position of the substrate in the transport direction but also due to a change in the inclination of the surface of the substrate. How much the measured value fluctuates depends on a state of the component, such as the shape of the component, whether the component has light transmittivity, whether the surface of the component has specular reflectivity, and the relationship between the color of the component and the color of the illumination light.

(Marker)

Hereinafter, a cubic shape element whose position is to be measured on an image is referred to as a "marker", and a position of a measurement target point determined in accordance with the cubic shape element is referred to as a "position of the marker".

Markers include a one-dimensional marker and a two-dimensional marker. The one-dimensional marker is an edge. An edge is a part in which portions (a set of pixels) with an attribute such as pixel density or color rapidly changing with respect to the surroundings in an image are linearly distributed. A search line is used to specify a position of the one-dimensional marker. The position of the one-dimensional marker is a position of an edge on a search line intersecting with the edge.

The two-dimensional marker is a figure. A position of the two-dimensional marker is a position of a specific feature point of a figure. A feature point of a figure is, for example, the center of gravity of a closed curve figure, the center of a circle or an arc, the intersection of two lines, a corner of a polygonal line, or the end point of a line segment. The position of the two-dimensional marker is measured with respect to a selected type of feature point.

Although terms such as "optimization" of the illumination condition and "minimization" of dispersion of a measured value are also used for consistency with the content of mathematical expressions in the following description, it is sufficient that an illumination condition is determined in a preferred range which is not actually optimal but practically does not cause any problem or the variance of measured values is reduced, and achieving "optimization" or the like which means only one best point is not the gist of the invention.

A typical procedure for measuring a position of a marker will be described with reference to an image g imaged or created as a virtual image. A situation in which the coordinates r of the marker are specified from the image g will be considered. In problem settings of position measurement, since it is assumed that the positional relationship between the workpiece and the camera fluctuates every time the workpiece is transported, measurement needs to be performed not in the camera coordinate system but in the workpiece coordinate system. For example, when a means for measuring a workpiece position:

[Math. 1]

$$\hat{r}_m$$

in the camera coordinate system is separately present and there is a translational variation in the position of the workpiece,
processing for converting the position into the workpiece coordinate system is performed as follows:

[Math. 2]

$$r'_m - \hat{r}_m$$

[Math. 1]

$$\hat{r}_m$$

may be the position of the workpiece detected from the image g. The coordinates r of the marker may be represented by the workpiece coordinate system of the orthogonal coordinate system or may be represented by the workpiece coordinate system of the polar coordinate system.

The position of the marker is determined as a position at which, with the entire or a part of the image g set as a search area E, a predetermined marker likelihood function L is maximized in the search area E (or at which the likelihood first exceeds a threshold value in a predetermined coordinate search order).

[Math. 3]

$$r = \arg\max_{r \in E} L(r \mid g, \theta)$$

Here, θ is a parameter vector for marker detection. The parameter vector may include not only a value used in an algorithm for obtaining the likelihood function L but also a value specifying the algorithm itself for obtaining the likelihood function L. For example, a threshold value of the image density on the search line may be provided, and a parameter, which specifies an algorithm of whether the position of a point at which the image density exceeds the threshold value from below to above from the start point to the end point of the search line is to be set as the edge position or whether the position of a point at which the image density exceeds the threshold value from above to below is to be set as the edge position, may be included.

The problem setting of the position measurement is, when the same individual workpiece is set as a measurement target, to cause the measured value of a relative position of the cubic shape element with respect to the workpiece not to vary even when there is a variation (transport variation) in the position of the workpiece with respect to the camera. An illumination condition is determined so that a variance J of position measured values defined below is minimized with respect to M workpiece images $g_m$ ($1 \le m \le M$) imaged in a situation in which there is a transport variation with respect to the same workpiece. At this time, a marker detection parameter θ may also be determined, or the marker detection parameter θ may be a fixed value.

[Math. 4]

$$J = \underset{m}{\mathrm{Var}}[r_m]$$

where

$$r_m = \arg\max_{r \in E} L(r \mid g_m, \theta)$$

$$\underset{m}{\mathrm{Var}}[x_m] \equiv \underset{m}{\mathrm{E}} \left\| x_m - \underset{m}{\mathrm{E}} x_m \right\|^2$$

(Variation of Measurement Problem Setting)

The variance J of the measured values may be as shown in Table 4.

[Table 4]

| Name | Definition of J | Description |
|---|---|---|
| Position | $J = \underset{m}{\mathrm{Var}}[r_m]$ | Variation of marker position (workpiece coordinate system) in Euclidean distance |

(continued)

| Name | Definition of J | Description |
|---|---|---|
| Position and orientation | $J = a \operatorname*{Var}_m[r_m] + b \operatorname*{Var}_m[\alpha_m]$<br><br>$a$ and $b$ are weight coefficients | When a position and orientation of a marker are determined<br><br>$$r_m, \alpha_m = \arg \max_{r \in E, \alpha} L(r, \alpha \mid g_m, \theta)$$<br><br>※ An angle $\alpha$ representing orientation is also converted into the workpiece coordinate system. |
| Distance in the reference direction | $J = \operatorname*{Var}_m[r_m]_Q$<br><br>$\operatorname*{Var}_m[x_m]_Q \equiv \operatorname*{E}_m \left\| x_m - \operatorname*{E}_m x_m \right\|_Q^2$<br><br>$\|r\|_Q^2 \equiv r^T Q r$ | When only the distance in the reference direction (projection matrix Q) is considered.<br><br>This corresponds to a case in which a single one-dimensional marker coordinate on the search line is considered. |

Although Table 4 shows position and orientation separately, generally in the present description, a position of the marker (the cubic shape element) includes orientation of the marker, and a position of the workpiece includes orientation of the workpiece.

(Acquirement of Preferred Illumination Condition)

A problem setting for selecting a preferred condition from among a plurality of candidate illumination conditions will be considered. The candidate illumination conditions are given as follows, for example.

- If the illumination device is a multi-channel (CH) illumination device, Z patterns are prepared as the pattern of the light emission amount of each illumination channel (CH), and a pattern suitable for measurement is selected from the Z patterns.
- If the illumination device is a movable illumination device (i.e., whose position or orientation is controllable), when z positions or orientations of the illumination device are prepared, a position or orientation suitable for measurement is selected from the z positions or orientations.

In the present embodiment, under each selectable illumination condition, imaging is performed a plurality of times in a state in which the position of the workpiece with respect to the camera is different from each other by simulating a transport variation, and an illumination condition under which a variation in the position measurement result obtained from each image obtained as a result of the imaging is minimized is selected.

Specifically, in an actual inspection environment, imaging M images while transporting the same workpiece under one illumination condition is repeated for each of Z illumination conditions. One of the ZM images imaged in this way is denoted by $g_{z,m}$.

An optimum illumination condition $z_{opt}$ to be obtained is obtained as follows to minimize the variation J of the measurement position.

[Math. 5]

$$z_{opt} = \arg \min_z J$$

The optimum illumination condition can be obtained by solving the optimization problem of the above expression by using any optimization method.

An optimum marker detection parameter $\theta_{opt}$ may also be obtained simultaneously. The optimization problem of illumination conditions and marker detection parameters can be expressed as follows.

[Math. 6]

$$z_{opt}, \theta_{opt} = \arg \min_{z, \theta} J$$

In the illumination condition specifying stage, an area including the marker may be designated by the user in advance. This reduces the possibility of an image feature unintended by the user being erroneously set as a measurement target. Hereinafter, this area will be referred to as a "search area $E^{(p)}$".

For a one-dimensional marker, a search line at an edge can be regarded as a search area $E^{(p)}$. Alternatively, the search area $E^{(p)}$ may be set to include the measurement target position on the edge, and the search line of the edge may be automatically set in the search area $E^{(p)}$. The search area $E^{(p)}$ for a two-dimensional marker is set to include a figure that is a two-dimensional marker.

(Example 1) The position on a one-dimensional coordinate axis is obtained from one-dimensional edge information.

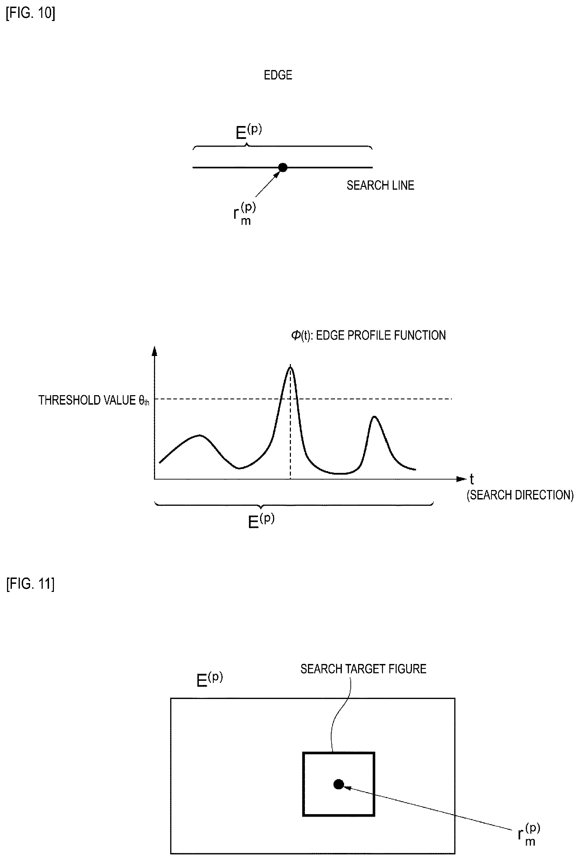

FIG. 10 is a diagram for explaining position measurement of a one-dimensional marker.

Hereinafter, an example in which a marker likelihood function is specifically defined will be described.

As the simplest example, a problem of searching for a position of a marker on a search line defined on an image will be considered. This corresponds to a case in which a marker search area is a line segment. As a marker, a structure having a spatial frequency at least in the search line direction (gradient is not zero) is required. For example, it corresponds to a sudden change in luminance or color. When a profile function of the image on the search line is set to $\varphi(t)$, the marker position can be confirmed if this function is given. The profile function is obtained by aggregating peripheral image information as a value on the search line, and for example, for each point on the search line, the mean or median for noise removal is obtained for a set of pixel values in a direction passing through the point and orthogonal to the search line. If necessary, post-processing such as differentiation or frequency filtering may be applied.

In this case, examples of the marker likelihood function include variations shown in the following table. Here, the position r in the marker likelihood function has a one to-one correspondence with the position t on the profile.

[Table 5]

| Name | $L(r \mid g, \theta)$ | $\theta$ |
|---|---|---|
| Profile threshold value | $\alpha\,\phi(t)$ | The sign of $\alpha$ is inverted depending on whether it is a "bright $\rightarrow$ dark" edge or a "dark $\rightarrow$ bright" edge. It also plays a role in threshold value adjustment. |
| Template matching by inner product | $\alpha\,\phi(t) * \psi(t)$ <br> * indicates one-dimensional convolution | $\alpha > 0$ represents threshold value adjustment. $\Phi$ represents a template function. |

(Example 2) A position on a two-dimensional coordinate axis is obtained from a two-dimensional marker.

FIG. 11 is a diagram for explaining position measurement of a two-dimensional marker.

As an example of a two-dimensional marker, any predetermined figure (for example, a circle or a rectangle) is exemplified. A figure may be a partial image identified by some local feature amount. However, it is necessary that spatial frequencies exist in all coordinate dimension directions for which coordinate measurement is desired, that is, the Hessian matrix is not degenerate. The position r is a representative position of the figure determined in some way, and is represented by, for example, xy coordinates. FIG. 11 illustrates a case in which the figure is a square and the representative position is the center of the square. As an example of the marker likelihood function in this case, there are variations shown in the following table.

[Table 6]

| Name | $L(r \mid g, \theta)$ | $\theta$ |
|---|---|---|
| Template matching by inner product | $\alpha\,\phi(t) * \psi(t)$ <br> * represents two-dimensional convolution | $\alpha > 0$ represents threshold value adjustment. $\Phi$ is a template function. |
| Template matching by subspace projection | $\alpha \sum_{i=1}^{N} |\phi(t) * \psi_i(t)|^2$ <br> * represents two-dimensional convolution | $\alpha > 0$ represents threshold value adjustment. $\Phi$ represents a template-specific function. |
| Scale-Invariant Feature Transform (SIFT) descriptor | Omitted | Parameter of SIFT descriptor and constant for threshold value adjustment. |
| Speeded Up Robust Features (SURF) descriptor | Omitted | Parameter of SIFT descriptor and constant for threshold value adjustment. |

(continued)

| Name | $L(r \mid g, \theta)$ | $\theta$ |
|---|---|---|
| Histogram of oriented Gradient (HOG) feature amount | Omitted | Parameter of HOG feature amount and constant for threshold value adjustment. |
| Haar-Like feature amount | Omitted | Parameter of Haar-Like feature amount and constant for threshold value adjustment |

As the feature amount for specifying the marker coordinates, any local feature amount proposed so far, for example, SIFT, SURF, HoG, Haar-Like, or the like can be used. The operation of determining coordinates serving as markers from the search area $E^{(p)}$ is similar to search for key points in feature amounts such as SIFT, SURF, and HoG.

(Example 3) The position on a two-dimensional coordinate axis is obtained from a plurality of pieces of one-dimensional edge information.

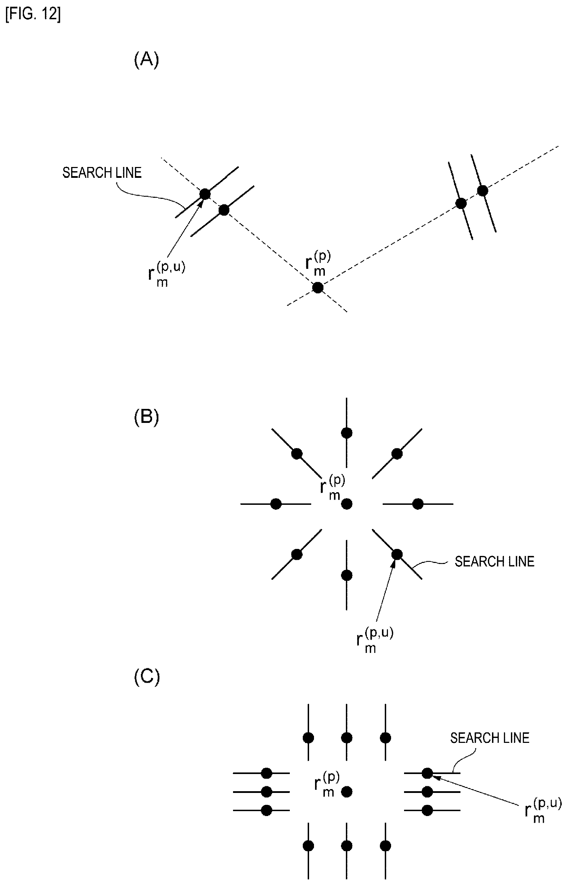

FIG. 12 is diagrams for explaining measurement of a position determined from a plurality of one-dimensional markers.

In the case of (Example 1), although the marker coordinates are determined on the search line determined in advance on the image, if the directions of two linear edges that are not parallel to each other are determined as illustrated in FIG. 12(A), the coordinates of the intersection of the edges can be specified. In order to ensure robustness against noise, there are many practical cases in which information of one-dimensional marker coordinates is integrated.

For example, in an application in which the position of a round hole or the position of a square component on a substrate is desired to be specified, search lines are arranged at fine intervals on a circumference as illustrated in FIG. 12(B) or on a side of a rectangle as illustrated in FIG. 12(C) to be orthogonal to the edge direction, edge coordinates (= one-dimensional marker coordinates) are detected on each search line, and outlier removal or least square fitting is performed on the edge position information to determine the position of the measurement target. When such a method is used, it is preferable that the search area is designated as a sectional shape between double lines surrounding the contour portion of a shape to be detected, and a search line which is a line segment terminating each of the double lines is set between the double lines.

(Example 4) Optimization When Individual Variation is Included

In addition to a variation in transport of the workpiece, an individual variation may be added to acquire the preferred illumination condition. Here, a value regarded as a true value of the individual variation (hereinafter, simply referred to as a "true value") can be measured by using another measuring means. A set of M workpiece samples are divided into sample sets $C_q$ having a transport variation for each of Q workpiece individuals, and a true value, which is,

[Math. 7]

$$\hat{r}_q$$

of a measured value can have been measured for the respective workpiece individual samples by using another measuring means. At this time, since it is necessary to simultaneously minimize the variations from the true value of the individual workpieces, the following evaluation criterion J is minimized.

[Math. 8]

$$J = \sum_{q=1}^{Q} \operatorname*{E}_{m \in C_q} \left\| r_m - \hat{r}_q \right\|^2$$

As described above, when individual variations of workpieces are included, optimization is performed to be close to the respective true values.

(Example 5) Optimization when True Value of Individual Variation is Unknown

When a measurement variation is defined as a variance of all workpiece samples including both of the individual workpieces and the transport variation, if the true value of a dimension to be measured also includes the individual variation, the illumination condition and the inspection parameter that are likely to make the individual variation of the true value of the dimension invisible on the contrary are obtained in the criterion of minimization of the overall variance. In order to avoid this, the set of M workpiece sample may be divided into sample sets $C_q$ having a transport variance for each of Q workpiece individuals, the variance may be individually evaluated for each workpiece individual, and finally the sum of the individually calculated variances may be defined as the variance to be minimized for all the workpieces. At this time, the evaluation criterion J to be minimized is defined as follows.

[Math. 9]

$$J = \sum_{q=1}^{Q} \mathop{\mathrm{Var}}_{m \in C_q} [r_m]$$

As described above, even when the measured true value varies due to the individual variation of the workpiece, only the transport variation can be minimized.

(Example 6) Test for Simultaneously Measuring a Plurality of Markers

The above description has dealt with a problem setting in which the position of one marker needs to be determined in order to obtain a measured value. In general, however, there are also cases in which a plurality of marker positions have to be measured in order to obtain one measured value. For example, there is a case in which a measured quantity is defined as a distance between markers.

As a specific example of a case in which a distance between two markers affected by an illumination condition is measured in position measurement, when a relative position of an LED element mounted on a substrate as a workpiece with respect to the substrate is measured, a case in which a feature serving as a reference of a position of the substrate is also three-dimension (marker) affected by an illumination condition, such as a hole having a rounded rim cross-sectional shape is exemplified. As another specific example, when two LED elements are mounted on a substrate, there may be a case in which stably measuring the distance between the two LED elements is more important than the relative position of each of the LED elements with respect to the substrate. Such a situation occurs when two LED elements are inserted into two holes provided at a predetermined interval in another member. In this case, an invention in which the position of one of the LED elements is regarded as the reference of the position of the substrate serving as a workpiece and the position of the other LED element is regarded as the position of the cubic shape element can be applied. One of the LED elements itself may be regarded as a workpiece. In this case, the other LED element which is the cubic shape element is regarded as being indirectly provided to the one LED element which is the workpiece via the substrate.

When positions of a plurality of markers are measured, the preferred illumination condition may be acquired for each marker. When a specific marker is imaged, the marker may be illuminated under the preferred illumination condition.

A situation in which coordinates $r^{(p)}$ of P markers are specified from an image g taken or created as a virtual image will be considered. A workpiece coordinate system is set in the image g. For each marker, each marker coordinate is confirmed from a predetermined search area $E^{(p)}$ on the assumption that a predetermined marker likelihood function L is maximized (or the likelihood first exceeds a threshold value in a predetermined coordinate search order).

[Math. 10]

$$r^{(p)} = \arg\max_{r \in E^{(p)}} L\left(r \mid g, \theta^{(p)}\right)$$

Here, $\theta^{(p)}$ is a parameter for detecting the p-th marker. An illumination condition is determined so that a variance J of the measured values defined in Table 7 is minimized with respect to M workpiece images $g_m$ ($1 \leq m \leq M$) imaged in a situation in which there is a transport variation with respect to the workpiece. At this time, a marker detection parameter may also be determined, or the marker detection parameter may be a fixed value.

[Table 7]

| Name | Definition of J | P | Description |
|---|---|---|---|
| 2D distance | $$J = \underset{m}{\mathrm{Var}}\left[r_m^{(2)} - r_m^{(1)}\right]$$ | 2 | Distance between two measured coordinates |
| 3D distance | $$J = \underset{m}{\mathrm{Var}}\left[r_m^{(2)} - r_m^{(1)}\right]_Q$$ $$\underset{m}{\mathrm{Var}}[x_m]_Q \equiv \underset{m}{\mathrm{E}}\left\|x_m - \underset{m}{\mathrm{E}}\,x_m\right\|_Q^2$$ $$\|r\|_Q^2 \equiv r^T Q r$$ | 2 | Distance on a measurement plane when three-dimensional coordinates are obtained as a measurement position Q is a projection matrix indicating the measurement plane. |
| Calculate a resulting measurement position from the measurement positions of a plurality of markers | $$J = \underset{m}{\mathrm{Var}}[\tilde{r}_m]$$ $$\tilde{r}_m = f\left(r_m^{(1)}, \ldots, r_m^{(P)}\right)$$ | 2 or more | Calculate a measurement position $\tilde{r}_m$ resulting from the measurement positions of the plurality of markers by using any function. (Example: When a measurement position is defined by an intersection of straight lines defined by two marker positions) |

As an example, the problem of measuring the distance between markers will be addressed. Since at least two markers are required to measure a distance, it is assumed that P = 2 in the following description. By using marker position coordinates obtained in the same manner as in the case of the position measurement, the measurement amount of a dimension is obtained as $|r^{(2)} - r^{(1)}|$. If an object whose dimension is to be measured (for example, point A and point B) cannot be included in the field of view of the camera, a mark for alignment is introduced so that point A (p = 1) and a mark for alignment (position $r^{(3)}$) are imaged in a first image, and point B (p = 2) and a mark for alignment (position $r^{(4)}$) are imaged in a second image. When there is no rotational deviation, the measurement amount of the dimension is obtained as $|(r^{(2)} - r^{(4)}) - (r^{(1)} - r^{(3)})|$.

The illumination condition is determined so that the variance J of the measured values of the dimension defined below is minimized with respect to M workpiece images $g_m$ ($1 \leq m \leq M$) imaged in a situation in which there is a transport variation with respect to the workpiece. At this time, the marker detection parameter $\theta$ may also be determined, or the marker detection parameter $\theta$ may be a fixed value.

[Math. 11]

$$J = \underset{m}{\mathrm{Var}}\left[r_m^{(2)} - r_m^{(1)}\right]$$

where

$$r_m^{(p)} = \arg\max_{r \in E^{(p)}} L\left(r \mid g_m, \theta^{(p)}\right)$$

(Example 7) Determination of Optimum Illumination Condition for Position Inspection by Illumination Simulation

Here, a method of optimizing an illumination condition in a case in which the number of illumination conditions is so large that imaging in advance is difficult under all illumination conditions. Optimization work is automated by utilizing the fact that an imaged image when an illumination condition is changed can be accurately estimated through an illumination simulation.

It is assumed that linearity (linearity between luminance and pixel values) of a sensor in an imaging system has been established. This means that linearity is established in a system including all types of signal processing such as demosaicing of a color filter and imaging correction such as gamma correction and dark current offset correction. In order to avoid non-linearity due to pixel saturation, high dynamic range (HDR) synthesis or the like may be used for imaging an image. At this time, in consideration of a situation in which a workpiece illuminated by K multi-channel (CH) illuminations is imaged, the light emission intensity of each illumination is expressed as the following vector.

$$u = (u_1,\, u_2, \ldots,\, u_k)^T,\ u_k \geq 0$$

At this time, assuming that $f_i$ is a column vector obtained by arranging images imaged by turning on only the i-th illumination at a predetermined intensity and turning off the other illumination as indicated by $u_i = 1$ and $u_j = 0$ ($j \neq i$), an imaged image g under any illumination condition u can be modeled by image superposition as follows.

[Math. 12]

$$g = \sum_{i=1}^{K} u_i f_i = (u^T \otimes I) f'$$

Here, f is a multi-channel (CH) image (one large column vector) in which K images defined below are arranged vertically.

[Math. 13]

$$f' = \sum_{i=1}^{K} e_i \otimes f_i$$

In the above expression,

[Math. 14]

$$\otimes$$

indicates the Kronecker product, $e_i$ indicates the standard base of

[Math. 15]

$$\mathbb{R}^K$$

and
I indicates a unit matrix.

As described above, the optimization of the multi-channel (CH) illumination is equivalent to generation of a feature vector g by the inner product operation from the original image f', that is, optimum design in a linear projection direction u in the projection matrix

[Math. 16]

$$u^T \otimes I$$

In the following description, it is generally considered that, in a situation in which K illuminations are mounted, an illumination light emission pattern is changed with respect to one workpiece, N patterns are imaged, and optimum illumination is determined.

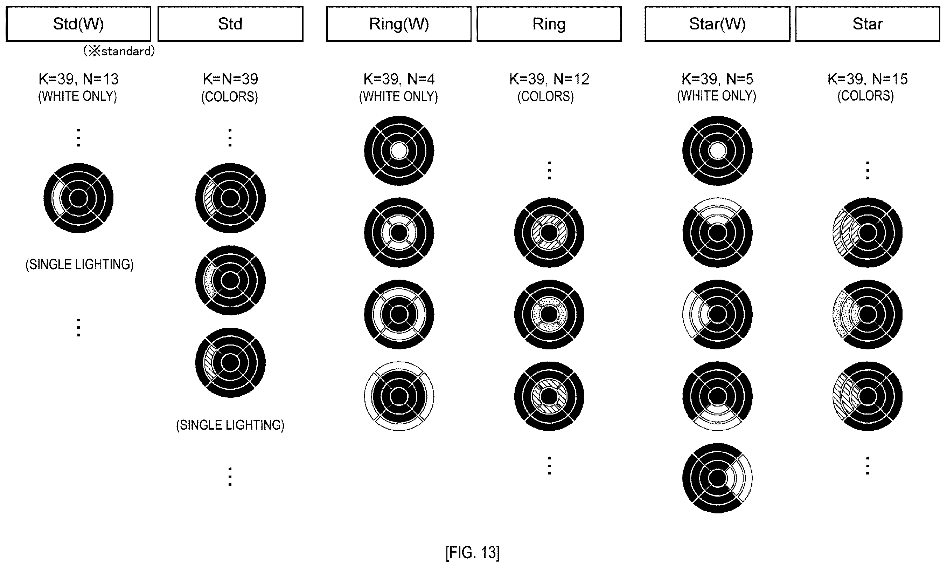

A light emission pattern in an n-th ($1 \leq n \leq N$) imaging is defined as follows. A specific example of this light emission pattern is illustrated in FIG. 13.

[Math. 17]

$$\boldsymbol{h}_n = \left( h_{1,n}, h_{2,n}, \cdots, h_{K,n} \right)^T, \qquad h_{k,n} \geq 0$$
$$\boldsymbol{H} = [\boldsymbol{h}_1, \boldsymbol{h}_2, \cdots, \boldsymbol{h}_N]$$

By imaging the workpiece according to these light emission patterns, it is possible to reconstruct an imaged image of the workpiece when the workpiece is illuminated with any light emission pattern. In order to acquire all the degrees of freedom of the system matrix, it is desirable to determine light emission pattern that satisfies rankH = min (N, K), that is, linearly independence. In order to make full use of all the K degrees of freedom in illumination, it is necessary that at least N = K in which H is full-rank.

On the other hand, although the degree of freedom of the number of illuminations cannot be sufficiently utilized in the case of N < K, this is an effective method for reducing the imaging time of the workpiece. Although various methods to achieve the reduction are considered, a representative method includes a method of performing light transport (LT) matrix estimation using compressed sensing.

A case in which N > K is also conceivable, and this is more than necessary in the sense of sufficiently utilizing the degree of freedom of illumination, and the number of imaged images becomes useless, but can be selected for another purpose such as gaining the SN ratio or the dynamic range.

With images imaged with these light emission patterns arranged as a column vector set to $f_i$, and a multi-channel (CH) image vector in which N images are further arranged vertically is defined as follows.

[Math. 18]

$$\boldsymbol{f}' = \sum_{i=1}^{N} \mathbf{e}_i \otimes \boldsymbol{f}_i$$

In the above expression,

[Math. 14]

$$\otimes$$

is the Kronecker product, and
$e_i$ is the standard basis of

[Math. 15]

$$\mathbb{R}^K$$

The luminance u of each illumination CH and the imaged image g at that time are expressed as follows.

[Math. 19]

$$\boldsymbol{u} = \boldsymbol{H}\boldsymbol{w}, \qquad \mathbf{w} = (w_1, w_2, \cdots, w_N)^T$$

$$g = \sum_{i=1}^{N} w_i f_i = (\boldsymbol{w}^T \otimes \boldsymbol{I}) f'$$

Here, $w_i$ is an image superimposition weight. (Although a command value of alight emission intensity is calculated based on the weight, it is not the value itself) Although this is generally allowed to take a negative value, since the light emission intensity of the illumination CH must be non-negative, the following conditions are imposed.

$$Hw \geq 0$$

Here, an inequality sign for a vector or a matrix is an inequality sign for all elements. H = I, that is, when K (= N) images are imaged by turning on illuminations one by one, u and w are equivalent to each other. In the following, the problem of obtaining the optimum illumination u in this case is addressed by obtaining the optimum image superimposition weight w.

When an illumination simulation is used, the actually occurring transport variation of the workpiece can be recorded in advance as an image, and the illumination condition can be optimized so as to minimize the variation in the measurement results with respect to the samples of the workpiece through an operation limited only on the computer.

In order to acquire an image imaged in a situation in which there is a workpiece transport variation, in an actual inspection environment, a set of M base images for an illumination simulation is acquired by imaging an image while transporting the same workpiece under one illumination condition. Hereinafter, the set of M base images will be denoted by $f'_m$ (1 ≤ m ≤ M) using the notation described above.

When an image superposition weight corresponding to an illumination condition is set to w, an imaged image $g_m$ (1 ≤ m ≤ M) is replaced in the illumination simulation

[Math. 20]

$$(\boldsymbol{w}^T \otimes \boldsymbol{I}) f'_m$$

and thereby the variance of measured values of the positions can be evaluated only on a computer. An optimization problem for obtaining an image superposition weight corresponding to an optimum illumination condition for position measurement can be expressed as follows.

[Math. 21]

$$\boldsymbol{w}_{\mathrm{opt}} = \arg \min_{Hw \geq 0} J$$

When the expression is applied to optimization of P marker detection parameters at the same time, it can be expressed as follows.

[Math. 22]

$$\boldsymbol{w}_{\mathrm{opt}}, \boldsymbol{\theta}_{\mathrm{opt}}^{(1)}, \boldsymbol{\theta}_{\mathrm{opt}}^{(2)}, ..., \boldsymbol{\theta}_{\mathrm{opt}}^{(P)} = \arg \min_{Hw \geq 0, \ \theta^{(1)}, \theta^{(2)}, ..., \theta^{(P)}} J$$

Although the exposure and the gain of the camera are also adjustment factors, the adjustment state of the exposure and the gain does not affect the trend of deviation according to the position (transport variation) of the workpiece in the measurement result of the relative position of the cubic shape element with respect to the workpiece. The exposure and the gain are determined in a range in which the imaged image does not become too bright or too dark in the illumination condition specifying stage and the measurement stage.

Although the embodiment of the present invention has been described in detail above, the above description is merely an example of the present invention in all respects. It goes without saying that various modifications and variations can be made without departing from the scope of the present invention. Although some or all of the above-described embodiment can be described as the following supplementary notes, the embodiment is not limited thereto.

(Supplementary Note 1)

A position measuring system (1) for measuring, for a workpiece (4) and a shape element having a cubic shape and provided on the workpiece (4), a relative position of the shape element with respect to the workpiece (4), the position measuring system (1) including:

an imaging device (102) configured to image the workpiece (4);
an illumination device (LS) that can be used as a light source for the imaging device (102) to image the workpiece (4) and change an illumination condition for the workpiece (4);
an image processing unit (141) configured to obtain the relative position by using the image of the workpiece (4);
an illumination condition specifying unit (142) configured to specify a preferred illumination condition of the illumination device (LS) under which a fluctuation in the relative position caused by a fluctuation in a positional relationship between the imaging device (102) and the workpiece (4) in imaging the image of the workpiece (4) and obtained by the image processing unit (141) is reduced; and
a measurement control unit (143) configured to cause the imaging device (102) to image the workpiece (4) under the preferred illumination condition and cause the image processing unit (141) to obtain the relative position by using the image of the workpiece (4) imaged.

(Supplementary Note 2)

The position measuring system (1) according to supplementary note 1, wherein the shape element is a one-dimensional shape element, and the image processing unit (141) obtains the relative position by using an intersection of a search line and the one-dimensional shape element as a position of the shape element.

(Supplementary Note 3)

The position measuring system (1) according to supplementary note 1, wherein the shape element is a two-dimensional shape element, and the image processing unit (141) obtains the relative position by using a representative position of the two-dimensional shape element specified within a search area as a position of the shape element.

(Supplementary Note 4)

The position measuring system (1) according to supplementary note 1, wherein the shape element includes a plurality of one-dimensional shape elements, and the image processing unit (141) obtains a position of an intersection of one search line of a plurality of search lines and one shape element of the plurality of one-dimensional shape elements for a plurality of pairs of the one search line and the one shape element and obtains the relative position by using representative positions obtained based on a plurality of the positions of intersections obtained as positions of the plurality of one-dimensional shape elements.

(Supplementary Note 5)

The position measuring system (1) according to supplementary note 1, wherein the preferred illumination condition specified by the illumination condition specifying unit (142) is an illumination condition under which, when images to be used for specifying the preferred illumination condition are images of a plurality of the workpieces (4) and include a plurality of images in which the positional relationship between the imaging device (102) and the workpieces (4) differs for one of the workpieces (4) and a value regarded as a true value of the relative position is further available for each of the workpieces (4), a sum of fluctuations in the relative position for the plurality of workpieces (4) from the value regarded as the true value for each of the workpieces (4) is reduced.

(Supplementary Note 6)

The position measuring system (1) according to supplementary note 1, wherein the preferred illumination condition specified by the illumination condition specifying unit (142) is an illumination condition under which, when images to be used for specifying the preferred illumination condition are images of a plurality of workpieces (4) and include a plurality of images in which the positional relationship between the imaging device (102) and the workpieces (4) differs for one of the workpieces (4), a sum of fluctuations in the relative position for each of the workpieces (4) for the plurality of workpieces is reduced.

(Supplementary Note 7)

The position measuring system (1) according to supplementary note 1, wherein the illumination condition specifying unit (142) specifies, when the workpiece (4) includes a plurality of the shape elements having a cubic shape, the preferred illumination condition for each of the shape elements having a cubic shape, and the image processing unit (141) obtains the relative position by using the image of the workpiece (4) imaged under the preferred illumination condition corresponding to the shape element having a cubic shape to be processed for each of the plurality of the shape elements having a cubic shape and provided on the workpiece (4).

(Supplementary Note 8)

The position measuring system (1) according to any one of supplementary notes 1 to 7, further including

a virtual image generation unit (146) configured to generate, based on an image of the workpiece (4) imaged under a plurality of illumination conditions, a virtual image of the workpiece (4) to be obtained when imaged under an illumination condition different from the illumination condition used for imaging, wherein
the image processing unit (141) obtains the relative position even when the image of the workpiece (4) is the virtual image, and
the illumination condition specifying unit (142) specifies the preferred illumination condition under which a fluctuation in the relative position obtained for the virtual image or for the image of the workpiece imaged and the virtual image is reduced.

(Supplementary Note 9)

The position measuring system (1) according to supplementary note 8, further including a determination unit (145) configured to obtain a deviation amount of the relative position obtained by the image processing unit (141) from a reference position and determine whether the relative position is favorable or unfavorable based on the deviation amount.

(Supplementary Note 10)

The position measuring system (1) according to any one of supplementary notes 1 to 7, further including a determination unit (145) configured to obtain a deviation amount of the relative position obtained by the image processing unit (141) from a reference position and determine whether the relative position is favorable or unfavorable based on the deviation amount.

(Supplementary Note 11)

A preferred illumination condition acquiring system (1) for acquiring, for a workpiece (4) and a shape element having a cubic shape and provided on the workpiece (4), a preferred illumination condition for illumination during imaging to measure a relative position of the shape element with respect to the workpiece (4), the preferred illumination condition acquiring system (1) including:

an imaging device (102) configured to image the workpiece (4);
an illumination device (LS) that can be used as a light source for the imaging device (102) to image the workpiece (4) and change the illumination condition for the workpiece (4);
an image processing unit (141) configured to obtain the relative position by using the image of the workpiece (4);
an illumination condition specifying unit (142) configured to specify a preferred illumination condition of the illumination device (LS) under which a fluctuation in the relative position caused by a fluctuation in a positional relationship between the imaging device (102) and the workpiece (4) in imaging the workpiece (4) and obtained by the image processing unit (141) is reduced.

(Supplementary Note 12)

A position measuring system (1) for measuring, for a workpiece (4) and a shape element having a cubic shape and provided on the workpiece (4), a relative position of the shape element with respect to the workpiece (4), the position measuring system including:

an imaging device (102) configured to image the workpiece (4);
an illumination device (LS) that can be used as a light source for the imaging device (102) to image the workpiece (4) and change an illumination condition for the workpiece (4);
an image processing unit (141) configured to obtain the relative position by using the image of the workpiece (4);
an illumination condition specifying unit (142) configured to acquire a preferred illumination condition of the illumination device (LS) pre-specified under which a fluctuation in the relative position caused by a fluctuation in a positional relationship between the imaging device (102) and the workpiece (4) in imaging the workpiece (4) and obtained by the image processing unit (141) is reduced; and
a measurement control unit (143) configured to cause the imaging device (102) to image the workpiece (4) under the preferred illumination condition and cause the image processing unit (141) to obtain the relative position by using the image of the workpiece (4) imaged.

REFERENCE SIGNS LIST

1: Position measuring system, 2: Belt conveyor, 4: Workpiece 6: Imaging field of view, 8: Upper-level network, 10: PLC, 12 Database device, 100: Processing device, 102: Camera, 104: Display, 106: Keyboard, 108: Mouse, 110: Processor, 112: Main memory, 114: Camera interface, 116: Input interface, 118: Display interface, 120: Communication interface, 122: Internal bus, 130: Storage, 132: Measurement program, 134: Illumination parameter, 138: Image, 141: Image processing unit, 142: Illumination condition specifying unit, 143: Measurement control unit, 144: Storage unit, 145: Determination unit, 146: Virtual image generation unit, LS: Illumination device, LSi: Channel illumination unit

**Claims**

1. A position measuring system for measuring, for a workpiece and a shape element having a cubic shape and provided on the workpiece, a relative position of the shape element with respect to the workpiece, the position measuring system comprising:

an imaging device configured to image the workpiece;
an illumination device that can be used as a light source for the imaging device to image the workpiece and change an illumination condition for the workpiece;
an image processing unit configured to obtain the relative position by using an image of the workpiece;
an illumination condition specifying unit configured to specify a preferred illumination condition of the illumination device under which a fluctuation in the relative position caused by a fluctuation in a positional relationship between the imaging device and the workpiece in imaging the workpiece and obtained by the image processing unit is reduced; and
a measurement control unit configured to cause the imaging device to image the workpiece under the preferred illumination condition and cause the image processing unit to obtain the relative position by using the image of the workpiece imaged.

2. The position measuring system according to claim 1, wherein

the shape element is a one-dimensional shape element, and
the image processing unit obtains the relative position by using an intersection of a search line and the one-dimensional shape element as a position of the shape element.

3. The position measuring system according to claim 1, wherein

the shape element is a two-dimensional shape element, and
the image processing unit obtains the relative position by using a representative position of the two-dimensional shape element specified within a search area as a position of the shape element.

4. The position measuring system according to claim 1, wherein

the shape element includes a plurality of one-dimensional shape elements, and
the image processing unit obtains a position of an intersection of one search line of a plurality of search lines and one shape element of the plurality of one-dimensional shape elements for a plurality of pairs of the one search line and the one shape element and obtains the relative position by using representative positions obtained based on a plurality of the positions of intersections as positions of the plurality of one-dimensional shape elements.

5. The position measuring system according to claim 1, wherein
the preferred illumination condition specified by the illumination condition specifying unit is an illumination condition under which, when images to be used for specifying the preferred illumination condition are images of a plurality of the workpieces and include a plurality of images in which the positional relationship between the imaging device and the workpieces differs for one of the workpieces and a value regarded as a true value of the relative position is further available for each of the workpieces, a sum of fluctuations in the relative position for the plurality of workpieces from the value regarded as the true value for each of the workpieces is reduced.

6. The position measuring system according to claim 1, wherein
the preferred illumination condition specified by the illumination condition specifying unit is an illumination condition under which, when images to be used for specifying the preferred illumination condition are images of a plurality of workpieces and include a plurality of images in which the positional relationship between the imaging device and the workpieces differs for one of the workpieces, a sum of fluctuations in the relative position for each of the workpieces for the plurality of workpieces is reduced.

7. The position measuring system according to claim 1, wherein

the illumination condition specifying unit specifies, when the workpiece includes a plurality of the shape elements having a cubic shape, the preferred illumination condition for each of the shape elements having a cubic shape, and
the image processing unit obtains the relative position by using the image of the workpiece imaged under the preferred illumination condition corresponding to the shape element having a cubic shape to be processed for each of the plurality of the shape elements having a cubic shape and provided on the workpiece.

8. The position measuring system according to any one of claims 1 to 7, further comprising

a virtual image generation unit configured to generate, based on an image of the workpiece imaged under a plurality of illumination conditions, a virtual image of the workpiece to be obtained when imaged under an illumination condition different from the illumination condition used for imaging, wherein
the image processing unit obtains the relative position even when the image of the workpiece is the virtual image, and
the illumination condition specifying unit specifies the preferred illumination condition under which a fluctuation in the relative position obtained for the virtual image or for the image of the workpiece imaged and the virtual image is reduced.

9. The position measuring system according to claim 8, further comprising
a determination unit configured to obtain a deviation amount of the relative position obtained by the image processing unit from a reference position and determine whether the relative position is favorable or unfavorable based on the deviation amount.

10. The position measuring system according to any one of claims 1 to 7, further comprising
a determination unit configured to obtain a deviation amount of the relative position obtained by the image processing unit from a reference position and determine whether the relative position is favorable or unfavorable based on the deviation amount.

11. A preferred illumination condition acquiring system for acquiring, for a workpiece and a shape element having a cubic shape and provided on the workpiece, a preferred illumination condition for illumination during imaging to measure a relative position of the shape element with respect to the workpiece, the preferred illumination condition acquiring system comprising:

an imaging device configured to image the workpiece;

an illumination device that can be used as a light source for the imaging device to image the workpiece and change the illumination condition for the workpiece;

an image processing unit configured to obtain the relative position by using the image of the workpiece; and

an illumination condition specifying unit configured to specify a preferred illumination condition of the illumination device under which a fluctuation in the relative position caused by a fluctuation in a positional relationship between the imaging device and the workpiece in imaging the workpiece obtained by the image processing unit is reduced.

12. A position measuring system for measuring, for a workpiece and a shape element having a cubic shape and provided on the workpiece, a relative position of the shape element with respect to the workpiece, the position measuring system comprising:

an imaging device configured to image the workpiece;

an illumination device that can be used as a light source for the imaging device to image the workpiece and change an illumination condition for the workpiece;

an image processing unit configured to obtain the relative position by using an image of the workpiece;

an illumination condition specifying unit configured to acquire a preferred illumination condition of the illumination device pre-specified under which a fluctuation in the relative position caused by a fluctuation in a positional relationship between the imaging device and the workpiece in imaging the workpiece and obtained by the image processing unit is reduced; and

a measurement control unit configured to cause the imaging device to image the workpiece under the preferred illumination condition and cause the image processing unit to obtain the relative position by using the image of the workpiece imaged.

[FIG. 1]

EP 4 597 025 A1

[FIG. 2]

[FIG. 3]

[FIG. 4]

[FIG. 5]

[FIG. 6]

LS, 102 (ILLUMINATION DEVICE, IMAGING DEVICE)

1

141 — IMAGE PROCESSING UNIT

144 — STORAGE UNIT

142 — ILLUMINATION CONDITION SPECIFYING UNIT

145 — DETERMINATION UNIT

143 — MEASUREMENT CONTROL UNIT

146 — VIRTUAL IMAGE GENERATION UNIT

[FIG. 7]

START

ILLUMINATION CONDITION SPECIFYING STAGE

MEASUREMENT STAGE

END

[FIG. 8]

SUBSTRATE POSITION REFERENCE MARK A    SEARCH LINE    SUBSTRATE POSITION REFERENCE MARK B

$r_m^{(0)}$
WORKPIECE
REFERENCE POSITION

SUBSTRATE

COMPONENT

$r_m^{(1)}$
MEASUREMENT POSITION

SUBSTRATE POSITION REFERENCE MARK C

[FIG. 9]

LIGHT SOURCE OF ILLUMINATION DEVICE

COMPONENT AT SECOND TRANSPORT POSITION

COMPONENT AT FIRST TRANSPORT POSITION

SHADE AREA        SHADE AREA

SUBSTRATE

[FIG. 10]

EDGE

$E^{(p)}$

SEARCH LINE

$r^{(p)}_m$

$\Phi(t)$: EDGE PROFILE FUNCTION

THRESHOLD VALUE $\theta_{th}$

t
(SEARCH DIRECTION)

$E^{(p)}$

[FIG. 11]

$E^{(p)}$

SEARCH TARGET FIGURE

$r^{(p)}_m$

na

[FIG. 12]

(A)

SEARCH LINE

$r_m^{(p,u)}$

$r_m^{(p)}$

(B)

$r_m^{(p)}$

SEARCH LINE

$r_m^{(p,u)}$

(C)

SEARCH LINE

$r_m^{(p)}$

$r_m^{(p,u)}$

[FIG. 13]

## INTERNATIONAL SEARCH REPORT

| | |
|---|---|
| International application No. | |
| | **PCT/JP2023/030195** |

| A. | CLASSIFICATION OF SUBJECT MATTER |
|---|---|

*G01B 11/14*(2006.01)i
FI:  G01B11/14 H

According to International Patent Classification (IPC) or to both national classification and IPC

| B. | FIELDS SEARCHED |
|---|---|

Minimum documentation searched (classification system followed by classification symbols)

G01B11/00-11/30; G01N21/84-21/958

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2021-92439 A (IKEGAMI TSUSHINKI KK) 17 June 2021 (2021-06-17)<br>entire text | 1-12 |
| A | JP 2022-49874 A (OMRON CORPORATION) 30 March 2022 (2022-03-30)<br>entire text | 1-12 |
| A | JP 2019-35609 A (OMRON CORPORATION) 07 March 2019 (2019-03-07)<br>entire text | 1-12 |
| A | JP 2019-2940 A (KEYENCE CO LTD) 10 January 2019 (2019-01-10)<br>entire text | 1-12 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 October 2023** | **31 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/030195**

| Patent document cited in search report | | | Publication date (day/month/year) | Patent family member(s) | | | Publication date (day/month/year) |
|---|---|---|---|---|---|---|---|
| JP | 2021-92439 | A | 17 June 2021 | (Family: none) | | | |
| JP | 2022-49874 | A | 30 March 2022 | WO entire text | 2022/059402 | A1 | |
| JP | 2019-35609 | A | 07 March 2019 | US entire text | 2019/0052789 | A1 | |
| | | | | DE | 102018102926 | A1 | |
| | | | | CN | 109387510 | A | |
| JP | 2019-2940 | A | 10 January 2019 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022156495 A
- JP 2014179186 A
- JP 2018031747 A